# DEMANDE DE BREVET EUROPEEN

(11) **EP 1 262 351 A1**
(43) Date de publication de la demande: **04.12.2002**
(21) Numéro de dépôt: 02364027.9
(22) Date de dépôt: 22.05.2002
(51) Int. Cl.: B60J 1/20

(54) **Store à enrouleur comprenant deux moteurs**

(30) Priorité: 28.05.2001 FR 0107135
(71) Demandeur: WAGON AUTOMOTIVE SNC, 79302 Bressuire Cédex (FR)
(72) Inventeur: Jolivet, David, 79300 Bressuire (FR)
(74) Mandataire: Bioret, Ludovic

(57) **Abrégé**

L'invention concerne un store à enrouleur, notamment pour véhicule automobile, comprenant un tube d'enroulement (12), mobile en rotation, auquel est solidarisée une première extrémité d'un écran souple (13), dont la seconde extrémité porte une barre de tirage (17), deux leviers symétriques (14₁, 14₂), montés pivotant et reliés à ladite barre de tirage (17), assurant le guidage et/ou l'entraînement de ladite barre de tirage (17) lors du déploiement et du reploiement dudit écran (13) autour dudit tube d'enroulement (12), ledit store comprenant deux moyens de motorisation distincts (15₁, 15₂) agissant chacun respectivement sur l'un desdits leviers (14₁, 14₂).

## Description

Le domaine de l'invention est celui des stores à enrouleur, notamment pour véhicules automobiles. Plus précisément, l'invention concerne les stores à enrouleur motorisés et munis de leviers guidant et/ou entraînant la barre de tirage, pour déployer ou reployer le store.

Classiquement, un store à enrouleur présente une toile, ou rideau, formant écran en position déployée. Une des extrémités de cette toile est montée sur un tube d'enroulement mobile en rotation. L'autre extrémité de la toile est munie d'une barre de tirage. En position reployée, la toile est essentiellement enroulée autour du tube, et la barre de tirage se trouve donc au voisinage du rouleau d'enroulement. Pour déployer la toile, on agit sur la barre de tirage, de façon à l'éloigner du tube d'enroulement, entraînant le déploiement de l'écran.

Dans certains cas, le store est actionné manuellement, le reploiement du store étant alors obtenu sous l'action d'une force de rappel entraînant le rouleau d'enroulement. Dans d'autres modes de réalisation, on a prévu que le déploiement et/ou le reploiement puissent être motorisés. L'invention concerne plus précisément les stores motorisés.

Pour de tels stores, on prévoit la présence de deux leviers de guidage et/ou de maintien de la barre de tirage, agissant sur celle-ci de façon que l'écran prenne la position déployée et/ou repliée souhaitée. Ces leviers sont montés pivotants, par exemple sur le bâti du store, et sont entraînés par des moyens de motorisation, pour le déploiement et/ou le repliement.

Il apparaît cependant que cette technique n'est pas toujours suffisants pour obtenir le bon positionnement de l'écran en position déployée. En effet, souvent, l'un des deux leviers se déplace plus rapidement que l'autre. En conséquence, il atteint sa position déployée alors que le second levier est encore en cours de déploiement. L'écran est alors mal déployé, de travers, et la toile présente des plis.

Le même problème se pose, de façon encore plus importante, lors du reploiement. En effet, il arrive que l'un des leviers se trouve déjà en position repliée, alors que l'autre ne l'est pas encore. Dans ce cas, l'enroulement de la toile n'est pas parfait, la barre de tirage n'est pas non plus bien positionnée, et l'ensemble risque de bouger, et surtout de se bloquer, voire de détériorer le système lors du déploiement suivant.

Différentes techniques ont été proposées pour lier les leviers l'un à l'autre, par exemple par des biellettes, des crémaillères, etc..., de façon que les leviers aient un déplacement symétrique. Cela suppose cependant des montages relativement complexes, et ne permet pas de répondre efficacement au cas où l'un des leviers est bloqué ou ralenti.

L'invention a notamment pour objectif de pallier ces différents inconvénients de l'état de la technique.

Plus précisément, un objectif de l'invention est de fournir un store à enrouleur motorisé ne nécessitant pas de moyens mécaniques ni de montage particuliers ou complexes pour lier les deux leviers.

Un objectif particulier de l'invention est de fournir un tel store dont l'enroulement et le déroulement sont de bonne qualité, la barre de tirage restant en permanence parallèle au rouleau d'enroulement.

En d'autres termes, un objectif de l'invention est de fournir un tel store, muni de leviers et/ou de guidage de la barre de tirage, dont les déplacements sont en permanence symétriques, ou à tout le moins pratiquement symétriques, lors du déploiement et du reploiement de l'écran.

Un autre objectif est de fournir un tel store, qui permette d'obtenir un repliement de bonne qualité et complet de la toile autour du rouleau d'enroulement. L'invention a également pour objectif de fournir un tel store, qui peut être motorisé.

Encore un autre objectif de l'invention est, bien sûr, de fournir un tel store, qui soit simple à réaliser et à monter, et qui permette d'obtenir un coût de revient acceptable.

Ces objectifs, ainsi que d'autres qui apparaîtront plus clairement par la suite, sont atteints à l'aide d'un store à enrouleur, notamment pour véhicule automobile, comprenant un tube d'enroulement, mobile en rotation, auquel est solidarisée une première extrémité d'un écran souple, dont la seconde extrémité porte une barre de tirage, deux leviers symétriques, montés pivotant et reliés à ladite barre de tirage, assurant le guidage et/ou l'entraînement de ladite barre de tirage lors du déploiement et du reploiement dudit écran autour dudit tube d'enroulement. Selon l'invention, le store comprend deux moyens de motorisation distincts agissant chacun respectivement sur l'un desdits leviers.

Cette technique va à l'encontre de l'usage et des habitudes de l'homme du métier, qui visent à limiter le nombre des moyens de motorisation mis en oeuvre, pour des raisons de coût, de consommation, d'encombrement,...Les inventeurs ont cependant vérifier que, dans le cas particulier des stores électriques pour véhicule, cette approche s'avère surprenamment efficace et rentable, du fait notamment qu'il est nécessaire de disposer sinon de moyens relativement complexes d'équilibrage des leviers et/ou de détection des éventuels blocages.

Selon un mode de réalisation avantageux, le store comprend un bâti, sur lequel sont montés ledit tube d'enroulement et lesdits leviers, et lesdits moyens de motorisation distincts sont montés sur et/ou dans ledit bâti.

Selon un autre mode de réalisation avantageux, ledit tube d'enroulement présente, à chacune de ces extrémités, un palier, et lesdits moyens de motorisation distincts sont montés sur et/ou dans lesdits paliers.

On peut également prévoir, de façon avantageuse, que lesdits moyens de motorisation distincts sont logés au moins en partie à l'intérieur dudit tube d'enroulement.

Selon une caractéristique préférentielle de l'invention, lesdits moyens de motorisation distincts sont alimentés et/ou contrôlés par des moyens de contrôle uniques.

Ainsi, avantageusement, lesdits moyens de contrôle agissent sur lesdits moyens de motorisation distincts de façon que ladite barre de tirage reste en permanence sensiblement parallèle audit tube d'enroulement.

Avantageusement, lesdits moyens de contrôle comprennent des moyens de détection d'un blocage ou d'un problème sur l'un desdits moyens de motorisation et/ou sur le levier correspondant.

Les leviers peuvent avoir des formes et des cinématiques diverses. Selon un mode de réalisation particulier, chacun desdits leviers présentent deux biellettes articulées, formant compas.

De façon avantageuse, la biellette reliant ladite barre de tirage à l'axe dudit compas est suffisamment élastique pour assurer une fonction de sécurité anti-pincement.

Préférentiellement, en position reployée, les biellettes de chacun desdits leviers forment un angle compris entre 0° et 15°.

D'autres caractéristiques et avantages de l'invention apparaîtront plus clairement à la lecture de la description suivante d'un mode de réalisation préférentiel de l'invention, donné à titre de simple exemple illustratif et non limitatif, et des figures annexés 1A et 1B illustrent, de façon schématique, un store à enrouleur selon l'invention, respectivement en position déployée, ou quasi-déployée, et en position repliée.

Ce store est, par exemple, destiné à équiper une lunette arrière de véhicule automobile.

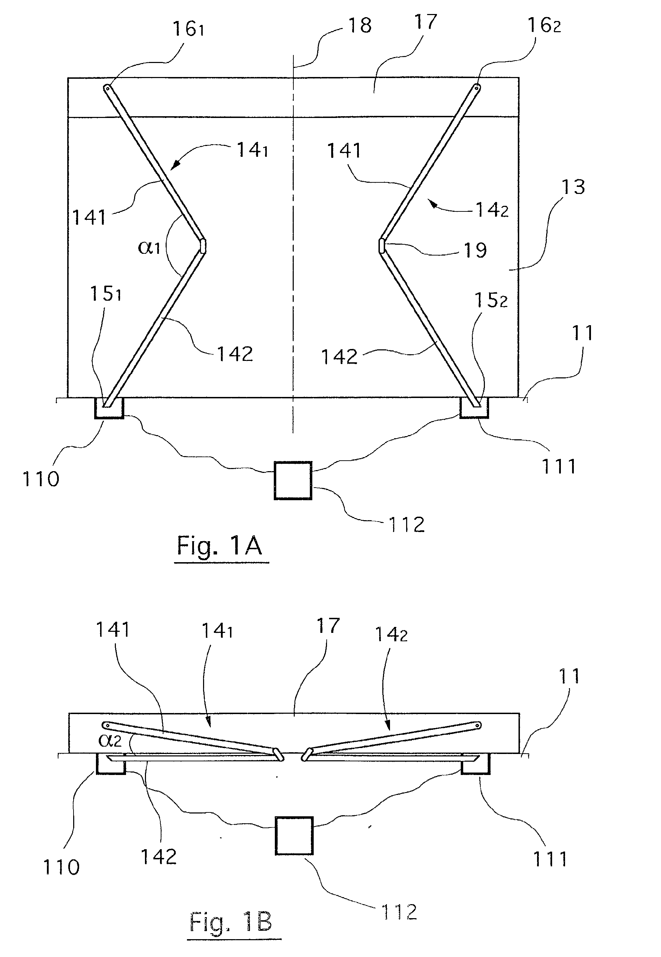

Il présente, classiquement, un bâti 11 qui peut former boîtier et/ou être prévu pour être monté sous la lunette arrière ou en tout emplacement adéquat. Un rouleau d'enroulement 12 est monté à rotation sur ce bâti 11. La toile 13 formant l'écran du store peut être enroulé sur ce rouleau 12 (position reployée : figure 1B) ou déroulée (position déployée: figure 1A).

Deux leviers 14₁ et 14₂ sont montés pivotants autour d'un axe 15₁, 15₂ sur le bâti 11. Une extrémité 16₁, 16₂ de ces leviers 14₁, 14₂ est solidaire de la barre de tirage 17, qui entraîne l'extrémité libre de la toile 13.

Les deux leviers 14₁ et 14₂ sont symétriques, par rapport à l'axe 18. Ils sont prévus pour assurer le guidage et/ou le maintien de la barre de tirage 17, dans toutes les positions, et notamment en cours de reploiement et de déploiement. Lors de ces opérations, les deux leviers 14₁, 14₂ pivotent autour de leurs axes respectifs 15₁ et 15₂.

Sur le mode de réalisation illustré en figure 1A et 1B, ces leviers 14₁ et 14₂ sont réalisés sous la forme de deux éléments 141 et 142 articulés en un point central 19, formant compas. Lors du déploiement (figure lA), l'angle α₁ entre les deux éléments 141 et 142 s'ouvre, et peut atteindre jusqu'à 180°. En position reployé (figure 1B), l'angle α₂ entre les deux éléments 141, 142 est très faible, voire nul, et la barre de tirage 17 vient en contact avec le bâti 11.

Cette structure en compas est avantageuse. Il est cependant possible d'envisager d'autres structures, telles qu'un levier simple (l'élément 142 se prolongera alors jusqu'à la barre de tirage 17, son extrémité pouvant par exemple coulisser dans une lumière prévue à cet effet dans la barre 17), un système à base de croisillons...

On comprend que la barre de tirage 17 doit en permanence rester parallèle au bâti 11, ou plus précisément au rouleau 12. En pratique, on constate dans les différents systèmes connus, qu'il n'est pas rare que l'un des leviers 14₁ ou 14₂ se déplace plus rapidement que l'autre, que ce soit du fait de la présence de frottements, d'un tirage de la barre de tirage 17 ou d'un entraînement du rouleau 12 non homogène, ...

Dans ce cas, la barre de tirage 17 n'est plus parallèle au rouleau 12. En position déployée, cela entraîne, au minimum, la présence de plis dans le store, mais éventuellement également une détérioration du système. Le problème est encore plus important en position reployée, l'un des côtés de la toile 13 n'étant pas convenablement enroulé. L'opération de déploiement suivante sera alors difficile et pourra conduire à une détérioration du store.

Selon l'invention, on associe à chaque levier 14₁ et 14₂ un moteur électrique 110 et 111 indépendant. Chaque levier est donc entraîné par son propre moteur, qui n'agit pas sur l'autre levier. Aucun moyen mécanique n'est prévu pour lier les mouvements des deux leviers, comme cela est nécessaire lorsqu'un seul moteur est utilisé.

Les deux moteurs 110 et 111 sont alimentés par le même circuit d'alimentation, relié à une batterie du véhicule.

Des moyens de contrôle 112 pilotent les deux moteurs 110 et 111, de façon que le déplacement des deux leviers se déploient de façon symétrique. Ces moyens de contrôle peuvent prendre en compte des informations tels que le nombre de tours de moteur effectués, le couple appliqué par le moteur, la puissance instantanée, l'intensité, un blocage du levier ou un ralentissement de ce dernier, etc.

En fonction de l'analyse de ces informations, les moyens de contrôle 112 agissent sur le moteur (alimentation du moteur, puissance ou intensité appliquée, nombre de tours à effectuer, arrêt d'urgence,...).

## Revendications

1. Store à enrouleur, notamment pour véhicule automobile, comprenant un tube d'enroulement (12), mobile en rotation, auquel est solidarisée une première extrémité d'un écran souple (13), dont la seconde extrémité porte une barre de tirage (17),
deux leviers symétriques (14₁, 14₂), montés pivotant et reliés à ladite barre de tirage (17), assurant le guidage et/ou l'entraînement de ladite barre de tirage (17) lors du déploiement et du reploiement dudit écran (13) autour dudit tube d'enroulement (12),
**caractérisé en ce qu'**il comprend deux moyens de motorisation distincts (15₁, 15₂) agissant chacun respectivement sur l'un desdits leviers (14₁, 14₂).

2. Store à enrouleur selon la revendication 1, **caractérisé en ce qu'**il comprend un bâti (11), sur lequel sont montés ledit tube d'enroulement (12) et lesdits leviers (14₁, 14₂),
et **en ce que** lesdits moyens de motorisation distincts (15₁, 15₂) sont montés sur et/ou dans ledit bâti (11).

3. Store à enrouleur selon l'une quelconque des revendications 1 et 2, **caractérisé en ce que** ledit tube d'enroulement (12) présente, à chacune de ces extrémités, un palier,
et **en ce que** lesdits moyens de motorisation distincts (15₁, 15₂) sont montés sur et/ou dans lesdits paliers.

4. Store à enrouleur selon l'une quelconque des revendications 1 à 3, **caractérisé en ce que** lesdits moyens de motorisation distincts (15₁, 15₂) sont logés au moins en partie à l'intérieur dudit tube d'enroulement (12).

5. Store à enrouleur selon l'une quelconque des revendications 1 à 4, **caractérisé en ce que** lesdits moyens de motorisation distincts (15₁, 15₂) sont alimentés et/ou contrôlés par des moyens de contrôle uniques (16).

6. Store à enrouleur selon la revendication 5, **caractérisé en ce que** lesdits moyens de contrôle (16) agissent sur lesdits moyens de motorisation distincts (15₁, 15₂) de façon que ladite barre de tirage (17) reste en permanence sensiblement parallèle audit tube d'enroulement (12).

7. Store à enrouleur selon l'une quelconque des revendications 5 et 6, **caractérisé en ce que** lesdits moyens de contrôle (16) comprennent des moyens de détection d'un blocage ou d'un problème sur l'un desdits moyens de motorisation et/ou sur le levier correspondant.

8. Store à enrouleur selon l'une quelconque des revendications 1 à 7, **caractérisé en ce que** chacun desdits leviers présentent deux biellettes (141, 142) articulées, formant compas.

9. Store à enrouleur selon la revendication 8, **caractérisé en ce que** la biellette (141) reliant ladite barre de tirage à l'axe dudit compas est suffisamment élastique pour assurer une fonction de sécurité anti-pincement.

10. Store à enrouleur selon l'une quelconque des revendications 8 et 9, **caractérisé en ce que**, en position reployée, les biellettes (141, 142) de chacun desdits leviers forment un angle compris entre 0° et 15°.
